# FASCICULE DE BREVET EUROPEEN

(11) **EP 3 240 657 B1**
(45) Date de publication et mention de la délivrance du brevet: **20.03.2019**
(21) Numéro de dépôt: 15808150.5
(22) Date de dépôt: 09.12.2015
(51) Int. Cl.: B25J 1/00, B25J 9/00, B25J 13/02, E01C 19/44

(54) **DISPOSITIF PORTATIF D'AMPLIFICATION D'UN EFFORT AXIAL**
TRAGBARE VORRICHTUNG ZUR VERSTÄRKUNG EINER AXIALKRAFT
PORTABLE DEVICE FOR AMPLIFYING AN AXIAL FORCE

(30) Priorité: 31.12.2014 FR 1463477
(43) Date de publication de la demande: 08.11.2017
(73) Titulaire: Commissariat à l'Énergie Atomique et aux Énergies Alternatives, 75015 Paris (FR)
(72) Inventeur: GARREC, Philippe, 91190 Gif-sur-Yvette (FR)
(74) Mandataire: Prouvez, Julien
(86) Numéro de dépôt international: PCT/EP2015/079161
(87) Numéro de publication internationale: WO 2016/107723

(56) Documents cités:
- WO-A1-2014/159608
- WO-A2-2012/149402
- FR-A1- 2 991 224
- US-A1- 2004 255 471

## Description

### DOMAINE DE L'INVENTION

La présente invention se rapporte au domaine des amplificateurs d'effort, et plus particulièrement des amplificateurs d'effort portatifs appliqués aux opérations sur chantiers de bâtiment et/ou de génie civil.

### ARRIERE PLAN DE L'INVENTION

Il est connu des dispositifs d'amplification d'effort comprenant un châssis horizontal fixé à une paroi d'un bâtiment et qui porte un bras s'étendant selon une direction verticale. L'extrémité inférieure du bras comporte une interface d'accueil d'un outil tel qu'une perceuse, une visseuse ou une riveteuse. L'utilisateur manipule le dispositif en agissant sur un organe de commande pourvu d'un capteur d'effort vertical. Lorsque le dispositif d'amplification d'effort détecte un effort de commande vertical sur le capteur, il commande alors un actionneur (généralement un vérin) de manière à appliquer sur l'outil une force verticale proportionnelle à l'effort appliqué sur l'organe de commande.

Il est également connu du document WO2012/149402 un dispositif d'amplification d'un effort de levage comprenant une plateforme à chenille supportant un bras de levage manipulé par un utilisateur. Un tel dispositif permet d'amplifier aisément un effort vertical mais est peu adapté à l'amplification d'efforts comprenant une composante horizontale majoritaire.

La réalisation d'ouvrages de génie civil tels que les radiers, les routes ou encore les dalles de bâtiment requièrent fréquemment de « tirer » un produit (béton, bitume, ...) à l'aide d'un râteau afin d'en égaliser la surface. De tels mouvements sollicitent le dos et les bras des opérateurs et sont source de nombreux traumatismes et accidents de travail. La direction variable de l'effort (l'inclinaison du râteau par rapport au sol évolue au fur et à mesure de son mouvement) ne permet pas d'adapter les amplificateurs d'efforts mono axiaux connus à une telle application.

Il n'existe alors aucun dispositif permettant de suppléer au moins partiellement à l'effort à exercer sur un râteau et permettant un déplacement rapide de l'utilisateur au fur et à mesure de la tâche de ratissage. Enfin, l'ensemble des amplificateurs d'efforts connus renferment des mécanismes délicats (organe de commande, actionneurs) qui ne sont pas adaptés aux conditions particulièrement difficiles des interventions sur chantier de construction.

### OBJET DE L'INVENTION

L'invention a pour but de réduire les efforts à fournir par un opérateur lors des opérations de ratissage sur chantier tout en conservant une mobilité satisfaisante de l'opérateur au cours de ces opérations.

### RESUME DE L'INVENTION

A cet effet, on prévoit un dispositif portatif d'amplification d'un effort axial appliqué à un outil comprenant :
- des moyens de liaison du dispositif à un utilisateur ;
- des moyens de guidage en translation de l'outil selon un axe longitudinal;
- des moyens d'actionnement de l'outil selon l'axe longitudinal comprenant un tambour pourvu d'une motorisation et un câble solidaire de l'outil et réalisant au moins une spire autour du tambour;
- des moyens de commande des moyens d'actionnement pour appliquer à l'outil un effort d'assistance en réponse à un effort d'actionnement donné par l'utilisateur via un organe de commande ;
dans lequel les moyens de liaison à l'utilisateur et les moyens de guidage en translation de l'outil autorisent la libre rotation de l'outil autour de l'axe longitudinal et autour d'au moins un axe s'étendant dans un plan normal à l'axe longitudinal.

Ainsi, le dispositif permet d'assister la manoeuvre d'un outil comme un râteau, en traction et en poussée, tout en conservant les degrés de liberté nécessaire à l'accomplissement des tâches de ratissage. La motorisation à l'aide d'un tambour entrainant un câble est robuste, simple, légère et économique tout en garantissant une transmission d'effort fidèle.

L'invention s'applique également à un exosquelette inférieur pourvu d'un dispositif d'amplification d'effort selon l'invention.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux figures annexées parmi lesquelles :
- la figure 1 est une représentation schématique en perspective d'un premier mode de réalisation de dispositif d'amplification selon l'invention ;
- la figure 2 est une vue de détail schématique d'un capteur d'effort du dispositif d'amplification de la figure 1 ;
- la figure 3 est une représentation schématique partielle en perspective d'un deuxième mode de réalisation de l'invention ;
- la figure 4 est une vue schématique en plan du dispositif de la figure 3 ;
- la figure 5 est une représentation schématique en plan d'un troisième mode de réalisation du dispositif d'amplification de l'invention ;
- la figure 6 est une vue de détail du dispositif de la figure 5;
- la figure 7 est une représentation schématique en perspective du dispositif de la figure 5 ;
- la figure 8 est une représentation schématique en perspective d'un quatrième mode de réalisation de l'invention.

### DESCRIPTION DETAILLEE DE L'INVENTION

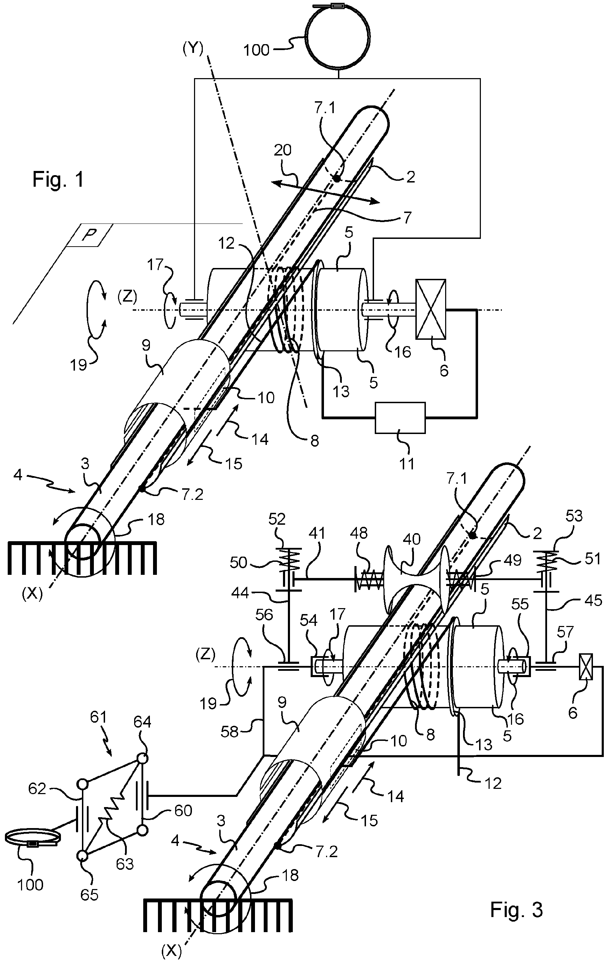

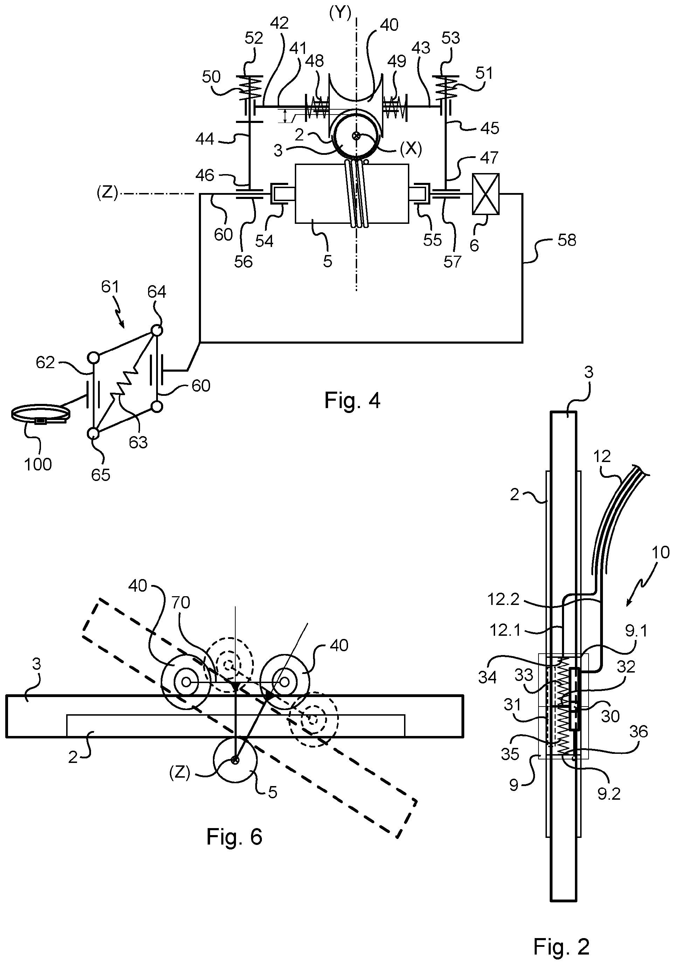

En référence aux figures 1 et 2, le dispositif amplificateur, généralement désigné 1, est monté sur une ceinture 100 destinée à être portée par l'utilisateur et comprend :
- une gouttière 2 demi cylindrique de guidage en translation selon un axe longitudinal X du manche 3 d'un râteau 4 ;
- un tambour 5 entrainé en rotation par un moteur 6 autour d'un axe Z, ici horizontal ;
- un câble 7 réalisant trois spires 8 autour du tambour 5 et dont les deux extrémités 7.1 et 7.2 sont reliées au manche 3 du râteau 4 ;
- un manchon 9 cylindrique de commande s'étendant autour de la gouttière 2 et du manche 3 qui y repose.

Le manchon 9 est relié à un capteur d'effort 10 mesurant l'effort longitudinal appliqué selon l'axe X sur le manchon 9. Le capteur d'effort 10 transmet à une unité de traitement 11 un signal électrique proportionnel à l'effort mesuré et à sa direction via un câble 12 s'enroulant sur une poulie folle 13 montée sur le tambour 5. Comme visible en figure 1, l'axe longitudinal X s'étend sensiblement perpendiculairement à l'axe Z de rotation du tambour 5.

L'effort d'assistance en translation du manche 3 du râteau 4 selon l'axe X peut alors être commandé par l'application d'un couple sur le moteur 6 déclenché par un déplacement du manchon 9 de commande. Le déplacement du manchon 9 de commande étant proportionnel à l'effort de commande exercé axialement sur celui-ci, l'effort d'assistance exercé sur le manche 3 du râteau 4 est donc fonction de l'effort de commande. Selon que le manchon 9 est tiré depuis l'extrémité de l'outil vers le tambour (flèche 14 sur la figure 1) ou que le manchon 9 est poussé (flèche 15 sur la figure 1), l'effort du moteur sur le râteau 4 est une poussée (rotation du tambour 5 dans le sens 16) ou une traction (rotation du tambour 5 dans le sens 17).

Le râteau 4 demeure aisément manipulable car les degrés de liberté suivants sont laissés libres dans des amplitudes compatibles avec les tâches à effectuer, sensiblement égales à [-45° ; +45°] :
- rotation du râteau 4 autour de l'axe longitudinal X (représentée par la flèche 18 sur la figure 1);
- rotation de la gouttière 2 et donc du râteau 4 autour de l'axe Z de rotation du tambour 5 (représentée par la flèche 19 sur la figure 1);
- rotation de la gouttière 2 et donc du râteau 4 autour d'un axe Y perpendiculaire à un plan P tangent au tambour 5 en son point de contact avec la gouttière 2 (représentée par la flèche 20 sur la figure 1).

Les axes Y et Z sont perpendiculaires entre eux et s'étendent dans un plan normal à l'axe longitudinal X.

La gouttière 2 pourra être, avantageusement, revêtue d'un revêtement en téflon facilitant le glissement du manche 3 du râteau 4.

En fonctionnement, l'utilisateur revêt la ceinture 100 de manière à ce que le tambour 5 soit situé à proximité d'une de ses hanches. L'utilisateur saisit le manchon 9 d'une main, l'autre main pouvant ou non saisir la gouttière 2. La main tenant le manchon 9 ainsi que, le cas échéant, l'autre main exerce des efforts de guidage dans le plan normal à l'axe X. Lorsqu'il souhaite déplacer le râteau 4 selon l'axe longitudinal X, l'utilisateur exerce un ordre de commande sous la forme d'un effort 21 appliqué sur le manchon 9. L'unité de traitement 11 détecte le sens et l'intensité de l'effort de commande 21 appliqué sur le manchon 9 et commande alors le moteur 6 afin d'appliquer un couple de travail 22 au tambour 5. Le sens et l'intensité du couple de travail 22 est fonction du sens et de l'intensité de l'effort 21 exercé sur le manchon 9. L'opérateur reste maître de la position du râteau 4 selon l'axe X, comme dans toutes les autres directions, car le tambour exerce un effort glissant donc non assujetti à une position ou une trajectoire donnée.

En référence à la figure 2, un mode de réalisation particulier du capteur d'effort 10 va être détaillé. Le capteur 10 comprend un index 30 parallélépipédique solidaire du manchon 9 et monté à coulissement par rapport à la gouttière 2. L'index 30 coulisse sur une piste résistive 31 solidaire de la gouttière 2 et dont une extrémité est reliée à un premier fil 12.1 du câble 12. Un deuxième fil 12.2 du câble 12 est lié à un stylet 32 solidaire de l'index 30 et dont une extrémité vient en contact avec la piste 31. L'index 30 est relié par un premier ressort 33 à un point 34 de la gouttière 2 situé à proximité d'une première extrémité 9.1 du manchon 9. L'index 30 est également relié par un deuxième ressort 35 à un deuxième point 36 de la gouttière 2 situé à proximité d'une deuxième extrémité 9.2 du manchon 9.

Lorsque l'utilisateur tire ou pousse sur le manchon 9, il fait varier la longueur de piste résistive 31 s'étendant entre le stylet 32 relié au câble 12.1 et l'extrémité de la piste résistive 31 reliée au fil 12.1. La résistance mesurée entre les fils 12.1 et 12.2 permet de déterminer simplement la valeur et le sens du déplacement du manchon 9. Les raideurs K₃₃ et K₃₅ respectives des ressorts 33 et 35 permettent alors de déduire l'intensité de l'effort exercée sur le manchon 9. Ce capteur d'effort 10 s'avère particulièrement robuste et peu sensible aux conditions d'humidité, de poussière et de chocs rencontrées sur les chantiers de construction.

Un deuxième mode de réalisation particulier de l'invention va maintenant être décrit en référence aux figures 3 et 4. Dans ce mode de réalisation, le manche 3 du râteau 4 est maintenu dans la gouttière 2 par un diabolo 40. Comme visible en figure 4, le diabolo 40 est monté à rotation sur un arbre 41 parallèle à l'axe de rotation Z du tambour 5. L'arbre 41 est monté coulissant en ses deux extrémités 42 et 43 respectivement sur deux tiges 44 et 45. Les extrémités 46 et 47 respectives des tiges 44 et 45 sont montées à rotation autour de l'axe Z de rotation du tambour 5 sur des paliers 56 et 57. L'arbre 41 comprend deux butées sur lesquelles s'appuient des ressorts 48 et 49 ramenant le diabolo 40 vers une position centrale. Ces ressorts 48 et 49 autorisent également une translation du diabolo 40 dans la direction de l'axe Z, notamment pour accompagner l'enroulement et le déroulement des spires 8 sur le tambour 5. Des ressorts 50 et 51 respectivement en appui sur les extrémités 52 et 53 des tiges 44 et 45 opposées aux extrémités 46 et 47 maintiennent le diabolo 40 au contact du manche 3. Les paliers 54 et 55 du tambour 5 ainsi que les paliers 56 et 57 des tiges 44 et 45 sont solidaires d'un support 58 monté à rotation autour d'une branche 60 sensiblement verticale d'un parallélogramme déformable 61 d'équilibrage à ressort. La branche 62 du parallélogramme 61 parallèle à la branche 60 est montée à rotation autour d'un axe sensiblement vertical solidaire de la ceinture 100. L'équilibrage du parallélogramme 61 est réalisé à l'aide d'un ressort 63 s'étendant entre deux coins opposés 64 et 65 du parallélogramme 61.

Lorsqu'il revêt la ceinture 100, l'utilisateur peut librement régler la hauteur du dispositif amplificateur 1, tout en conservant les degrés de liberté suivants :
- rotation du manche 3 du râteau 4 autour de l'axe longitudinal X ;
- rotation de la gouttière 2 et donc du râteau 4 autour de l'axe Z de rotation du tambour 5 ;
- rotation de la structure 58 autour de la branche 60 verticale du parallélogramme 61.

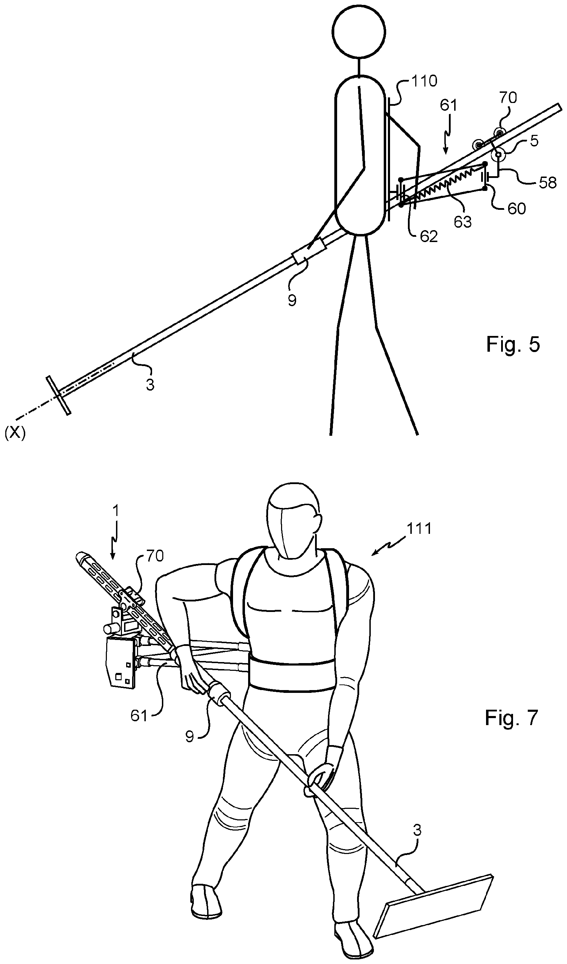

Les figures 5 à 7 représentent un mode de réalisation dans lequel le diabolo 40 est remplacé par un boggie 70 comprenant deux diabolos 40, assurant un guidage amélioré du manche 3 dans la gouttière 2. Dans ce mode de réalisation, la branche 62 du parallélogramme 61 est montée à rotation autour d'un axe sensiblement vertical solidaire d'une plaque dorsale 110 d'un harnais 111. L'utilisation du harnais 111 permet une meilleure répartition des efforts sur l'utilisateur, notamment les efforts verticaux et les couples.

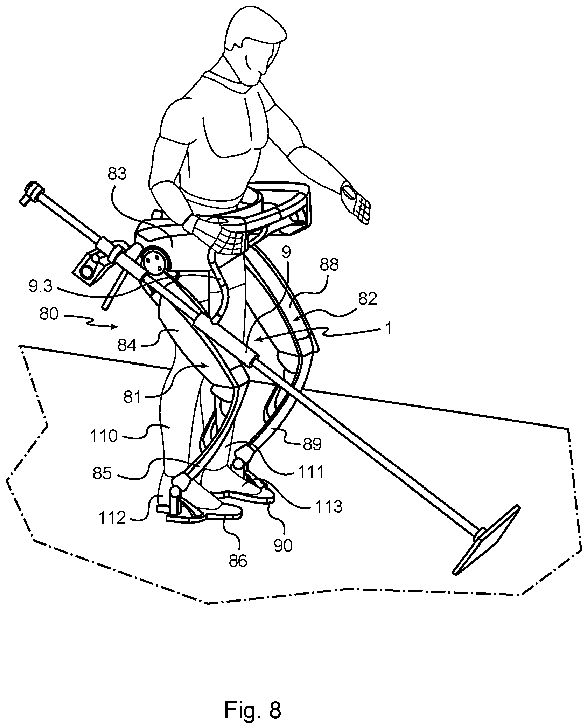

En référence à la figure 8, le dispositif d'amplification 1 est intégré à un exosquelette inférieur 80. L'exosquelette inférieur 80 comprend deux membres inférieurs 81 et 82 s'étendant respectivement dans un plan parallèle à la jambe droite 110 et un plan parallèle à la jambe gauche 111 de l'utilisateur. Le membre inférieur 81 est articulé sur un segment de hanche 83 et comprend un segment de cuisse 84 articulé sur un segment de tibia 85 à l'extrémité duquel est articulé un pied 86 sur lequel est fixé le pied 112 de l'utilisateur. Les articulations entre les segments de hanche 83, le segment de cuisse 84 et le segment de tibia 85 sont motorisées et commandées par une unité de traitement 87 de l'exosquelette inférieur 80. Le segment inférieur 82 comprend de manière homologue un segment de cuisse 88 articulé d'une part sur le segment de hanche 83 et d'autre part sur un segment de tibia 89 à l'extrémité duquel est articulé un pied 90 sur lequel est fixé le pied 113 de l'utilisateur. Dans le mode de réalisation représenté en figure 6, le manchon 9 reçoit une poignée 9.3 permettant à l'utilisateur de ne pas avoir à se pencher pour actionner le manchon 9. L'unité de traitement 87 pilote les motorisations des articulations de l'exosquelette inférieur 80 en fonction des mouvements des jambes 110 et 111 de l'utilisateur et des informations reçues par l'unité de traitement 11 du dispositif d'amplification 1. Ainsi, l'unité de traitement 87 peut ordonner un blocage - ou l'application d'efforts d'équilibrage calculés par l'unité de traitement 87 - d'un seul ou des deux membres inférieurs 81 et 82 lors de l'actionnement du râteau 3 afin de soulager les sollicitations sur les jambes et le dos de l'utilisateur.

Le terme câble désigne ici un composant flexible de section pleine ou tubulaire de forme circulaire, plate ou autre, pouvant être composés de sous éléments articulés entre eux, comme par exemple une chaîne ou une courroie.

Bien entendu, l'invention n'est pas limitée aux modes de réalisation décrits mais englobe toute variante entrant dans le champ de l'invention telle que définie par les revendications.

En particulier,
- bien qu'ici le dispositif d'amplification soit monté sur une ceinture ou un harnais comprenant une plaque dorsale, l'invention s'applique à d'autres moyens de liaison à un utilisateur, comme par exemple un harnais dépourvu de plaque dorsale, des bretelles ou éventuellement une seconde poignée solidaire de la gouttière ;
- bien qu'ici le râteau soit guidé en translation par une gouttière semi cylindrique, l'invention s'applique également à d'autres moyens de guidage en translation comme par exemple plusieurs douilles de glissement coaxiales, un ou plusieurs tétons dans une glissière ou une gouttière de forme triangulaire ou quelconque ;
- bien qu'ici la translation du manche du râteau relativement à la gouttière soit assurée par friction sur un revêtement à faible coefficient de frottement, l'invention s'applique également à d'autres moyens de coulissement comme par exemple des galets ou des rouleaux solidaires de l'un ou l'autre du manche et de la gouttière ;
- bien qu'ici le dispositif ait été décrit en rapport avec l'actionnement d'un râteau, l'invention s'applique également à d'autres types d'outils comme par exemple un grattoir, un rouleau ou une taloche ;
- bien qu'ici, l'axe d'entrainement du tambour soit horizontal, l'invention s'applique également à des moyens d'actionnement comprenant un tambour dont l'axe est orienté différemment comme par exemple un axe vertical ou orienté selon une direction quelconque ;
- bien qu'ici le câble réalise trois spires autour du tambour, l'invention s'applique également à un nombre différents de spires comme par exemple une seule spire, deux ou plus de trois ;
- bien qu'ici la commande des moyens d'actionnement soit exercée par l'utilisateur sur un manchon, l'invention s'applique également à d'autres types d'organes de commande comme par exemple une poignée, un bouton rotatif ou un joystick ;
- bien qu'ici le capteur d'effort soit de type résistif, l'invention s'applique également à d'autres moyens de détection et/ou de mesure d'un effort appliqué à une commande comme par exemple une jauge de déformation, un capteur optique face à une piste segmentée, une câble lié à un codeur rotatif incrémental. Le capteur peut transmettre l'information par voie filaire ou sans fil comme par exemple selon un protocole wifi ou Bluetooth ;
- bien qu'ici l'index du capteur d'effort soit ramené en position à l'aide de ressorts, l'invention s'applique également à d'autres types de moyens élastiques comme par exemple des blocs élastomères, des rondelles Belleville, un ou plusieurs vérins à gaz ;
- bien qu'ici la commande de la motorisation du tambour soit effectuée par une unité de traitement, l'invention s'applique également à d'autres moyens de commande comme par exemple une vanne hydraulique ou pneumatique trois voies ou un variateur électrique.

## Revendications

1. Dispositif (1) portatif d'amplification d'un effort axial appliqué à un outil comprenant :
- des moyens de liaison (100) du dispositif à un utilisateur ;
- des moyens de guidage en translation (2) de l'outil (4) selon un axe longitudinal (X);
- des moyens d'actionnement de l'outil selon l'axe longitudinal (X) comprenant un tambour (5) pourvu d'une motorisation (6) et un câble (7) solidaire de l'outil (4) et réalisant au moins une spire (8) autour du tambour (5);
- des moyens de commande des moyens d'actionnement pour appliquer à l'outil un effort d'assistance en réponse à un effort d'actionnement donné par l'utilisateur via un organe de commande ;
dans lequel les moyens de liaison (100) à l'utilisateur et les moyens de guidage en translation (2) de l'outil (4) autorisent la libre rotation de l'outil (4) autour de l'axe longitudinal (X) et autour d'au moins un axe (Z, Y) s'étendant dans un plan (P) normal à l'axe longitudinal (X).

2. Dispositif (1) selon la revendication 1, dans lequel l'organe de commande est pourvu des moyens de mesure d'un effort longitudinal.

3. Dispositif selon la revendication 1, dans lequel les moyens de liaison (100) du dispositif à l'utilisateur et les moyens de guidage en translation (2) autorisent la libre rotation de l'outil autour de deux axes perpendiculaires (Z, Y) s'étendant dans un plan (P) normal à l'axe longitudinal (X).

4. Dispositif selon la revendication 1, dans lequel l'un des axes (Y, Z) de libre rotation de l'outil (4) est sensiblement vertical.

5. Dispositif (1) selon la revendication 1, dans lequel l'organe de commande (9) comprend un capteur (10) de déplacement d'un index (30) ramené en position par au moins un élément élastique (33, 35).

6. Dispositif selon la revendication 1, dans lequel l'organe de commande (9) est relié aux moyens de commande (11) par une liaison sans fil.

7. Dispositif selon la revendication 1, dans lequel les moyens de guidage en translation (2) de l'outil (4) comprennent au moins un diabolo (40).

8. Dispositif selon la revendication 1, dans lequel au moins une extrémité (7.1, 7.2) du câble (7) est reliée à l'outil (4).

9. Dispositif selon la revendication 1, dans lequel les moyens de liaison (100) à l'utilisateur comprennent des moyens d'adaptation (61) de la hauteur de l'outil (4).

10. Dispositif selon la revendication 9, dans lequel les moyens de liaison à l'utilisateur (100) comprennent un parallélogramme (61) d'équilibrage.

11. Exosquelette inférieur (80) comprenant un dispositif (1) selon l'une quelconque des revendications précédentes.

12. Exosquelette inférieur (80) selon la revendication 11, comprenant au moins un membre inférieur (81, 82) articulé et dans lequel l'unité de traitement (87) est agencée pour pouvoir commander un blocage d'au moins une articulation du membre inférieur (81, 82).

13. Exosquelette inférieur (80) selon la revendication 11, comprenant au moins un membre inférieur (81, 82) articulé et dans lequel l'unité de traitement (87) est agencée pour pouvoir commander l'application d'un couple d'équilibrage sur une articulation du membre inférieur (81, 82).

## Patentansprüche

1. Tragbare Vorrichtung (1) zur Verstärkung einer Axialkraft, die auf ein Werkzeug aufgebracht wird, umfassend:
- Verbindungsmittel (100) zum Verbinden der Vorrichtung mit einem Benutzer;
- Translationsführungsmittel (2) zur Translationsführung des Werkzeugs (4) entlang einer Längsachse (X);
- Betätigungsmittel zur Betätigung des Werkzeugs entlang der Längsachse (X), die eine Trommel (5) umfassen, die mit einer Motorisierung (6) versehen ist, sowie ein Kabel (7), das fest mit dem Werkzeug (4) verbunden ist und mindestens eine Windung (8) um die Trommel (5) herum bildet;
- Steuermittel zur Steuerung der Betätigungsmittel, um auf das Werkzeug eine Unterstützungskraft in Antwort auf eine Betätigungskraft aufzubringen, die von dem Benutzer über ein Steuerelement vorgesehen wird;
bei der die Verbindungmittel (100) zur Verbindung mit dem Benutzer und die Translationsführungsmittel (2) zur Translationsführung des Werkzeugs (4) die freie Drehung des Werkzeugs (4) um die Längsachse (X) und um mindestens eine Achse (Z, Y) gestatten, die sich in einer Ebene (P) senkrecht zur Längsachse (X) erstreckt.

2. Vorrichtung (1) nach Anspruch 1, bei der das Steuerelement mit Messmitteln zur Messung einer Längskraft versehen ist.

3. Vorrichtung nach Anspruch 1, bei der die Verbindungsmittel (100) zur Verbindung der Vorrichtung mit dem Benutzer und die Translationsführungsmittel (2) die freie Drehung des Werkzeugs um zwei senkrechte Achsen (Z, Y) gestatten, die sich in einer Ebene (P) senkrecht zur Längsachse (X) erstrecken.

4. Vorrichtung nach Anspruch 1, bei der eine der Achsen (Y, Z) zur freien Drehung des Werkzeugs (4) im Wesentlichen vertikal ist.

5. Vorrichtung (1) nach Anspruch 1, bei der das Steuerelement (9) einen Sensor (10) zur Bestimmung einer Verschiebung eines Index (30) umfasst, der durch mindestens ein elastisches Element (33, 35) in Position zurückgebracht wird.

6. Vorrichtung (1) nach Anspruch 1, bei der das Steuerelement (9) mit den Steuermitteln (11) über eine drahtlose Verbindung verbunden ist.

7. Vorrichtung nach Anspruch 1, bei der die Translationsführungsmittel (2) zur Translationsführung des Werkzeugs (4) mindestens eine doppelkegelige Rolle (40) umfassen.

8. Vorrichtung nach Anspruch 1, bei der mindestens ein Ende (7.1, 7.2) des Kabels (7) mit dem Werkzeug (4) verbunden ist.

9. Vorrichtung nach Anspruch 1, bei der die Verbindungsmittel (100) zur Verbindung mit dem Benutzer Anpassungsmittel (61) zum Anpassen der Höhe des Werkzeugs (4) umfassen.

10. Vorrichtung nach Anspruch 9, bei der die Verbindungsmittel (100) zur Verbindung mit dem Benutzer ein Ausgleichsparallelogramm (61) umfassen.

11. Unteres Exoskelett (80), umfassend eine Vorrichtung (1) nach einem der vorhergehenden Ansprüche.

12. Unteres Exoskelett (80) nach Anspruch 11, umfassend mindestens eine angelenkte untere Gliedmaße (81, 82) und bei dem die Verarbeitungseinheit (87) so ausgebildet ist, dass sie eine Blockierung mindestens einer Gelenkverbindung der unteren Gliedmaße (81, 82) steuern kann.

13. Unteres Exoskelett (80) nach Anspruch 11, umfassend mindestens eine angelenkte untere Gliedmaße (81, 82) und bei dem die Verarbeitungseinheit (87) so ausgebildet ist, dass sie das Aufbringen eines Ausgleichsdrehmoments auf eine Gelenkverbindung der unteren Gliedmaße (81, 82) steuern kann.

## Claims

1. A portable device (1) for amplifying an axial force applied to a tool comprising:
- means (100) for linking the device to a user;
- means (4) for guiding the tool in translation (2) along a longitudinal axis (X);
- means for actuating the tool along the longitudinal axis (X) comprising a drum (5) provided with a motor (6) and a rope (7) rigidly connected to the tool (4) and forming at least one turn (8) around the drum (5);
- means for controlling the actuating means for applying an assistance force to the tool in response to an actuating force provided by the user via a control unit;
wherein the means (100) for linking to the user and the means (2) for guiding the tool (4) in translation allow the tool (4) to rotate freely about the longitudinal axis (X) and about at least one axis (Z, Y) extending in a plane (P) which is normal to the longitudinal axis (X).

2. The device (1) as claimed in claim 1, in the control unit is provided with means for measuring a longitudinal force.

3. The device as claimed in claim 1, wherein the means (100) for linking the device to the user and the means (2) for guiding in translation allow the tool to rotate freely about two perpendicular axes (Z, Y) extending in a plane (P) which is normal to the longitudinal axis (X).

4. The device as claimed in claim 1, wherein one of the axes (Y, Z) of free rotation of the tool (4) is substantially vertical.

5. The device (1) as claimed in claim 1, wherein the control unit (9) comprises a sensor (10) for the displacement of an index (30) that is moved back into position by at least one elastic element (33, 35).

6. The device as claimed in claim 1, wherein the control unit (9) is connected to the means (11) of control by a wireless link.

7. The device as claimed in claim 1, wherein the means (2) for guiding the tool (4) in translation comprise at least one dolly (40).

8. The device as claimed in claim 1, wherein at least one extremity (7.1, 7.2) of the rope (7) is connected to the tool (4).

9. The device as claimed in claim 1, wherein the means (100) for linking to the user comprising means (61) for adapting the height of the tool (4).

10. The device as claimed in claim 9, wherein the means (100) for linking to the user comprise a balancing parallelogram (61).

11. A lower exoskeleton (80) comprising a device (1) as claimed in any one of the preceding claims.

12. The lower exoskeleton (80) as claimed in claim 11, comprising at least one articulated lower member (81, 82) and wherein the processing unit (87) is so arranged as to be capable of controlling the blocking of at least one articulation of the lower member (81, 82).

13. The lower exoskeleton (80) as claimed in claim 11, comprising at least one articulated lower member (81, 82) and wherein the processing unit (87) is so arranged as to be capable of controlling the application of a balancing torque to an articulation of the lower member (81, 82).
